# EUROPÄISCHE PATENTANMELDUNG

(11) **EP 4 434 899 A1**
(43) Veröffentlichungstag der Anmeldung: **25.09.2024**
(21) Anmeldenummer: 24163102.7
(22) Anmeldetag: 13.03.2024
(51) Int. Cl.: B65B 11/12, B29C 65/00, B65B 19/02, B65B 19/22, B65B 51/14

(54) **VERFAHREN ZUM VERBINDEN ÜBERLAPPENDER ABSCHNITTE VON ZUSCHNITTEN**

(30) Priorität: 20.03.2023 DE 102023106884
(71) Anmelder: Focke & Co. (GmbH & Co. KG), 27283 Verden (DE)
(72) Erfinder: Storcks, Andreas, 21271 Asendorf (DE); Riegler, Stefan, 21073 Hamburg (DE)
(74) Vertreter: Aulich, Martin

(57) **Zusammenfassung**

Die Erfindung betrifft ein Verfahren zum Verbinden von mindestens zwei sich überlappenden Abschnitten (14 a-b) eines oder mehrerer Zuschnitte (13) aus insbesondere siegelbarer Folie oder insbesondere siegelbarem Papier im Rahmen der Fertigung von Packungen (10), vorzugsweise für Tabakprodukte, bei dem die sich überlappenden Abschnitte (14 a-b) insbesondere in einer Verbindungsstation (24 a-d) miteinander verbunden werden unter Verwendung von Druck und Wärme, wobei der Druck auf eine erste Seite der sich überlappenden Abschnitte (14 a-b) aufgebracht wird. Sie ist dadurch gekennzeichnet, dass insbesondere in der Verbindungsstation (24 a-d) eine der ersten Seite gegenüberliegende zweite Seite der sich überlappenden Abschnitte (14 a-b) an einem vorzugsweise bewegbaren Stützorgan (33) durch Relativbewegung zwischen dem Stützorgan (33) und den sich überlappenden Abschnitten (14 a-b) zur Anlage gebracht wird, sodass das Stützorgan (33) während des Aufbringen des Drucks die sich überlappenden Abschnitte (14 a-b) mindestens bereichsweise stützt und dabei einen dem Druck entgegengerichteten, insbesondere das Verbinden ermöglichenden Gegendruck bewirkt.

## Beschreibung

Die vorliegende Erfindung betrifft ein Verfahren und eine Vorrichtung zum Verbinden von mindestens zwei sich überlappenden Abschnitten eines oder mehrerer Zuschnitte aus insbesondere siegelbarer Folie oder insbesondere siegelbarem Papier im Rahmen der Fertigung von Packungen, vorzugsweise für Tabakprodukte, bei dem die sich überlappenden Abschnitte insbesondere an einer Verbindungsstation miteinander verbunden werden unter Verwendung von Druck und Wärme, wobei der Druck auf eine erste Seite der sich überlappenden Abschnitte aufgebracht wird.

Bei der Herstellung einer Packung für Tabakprodukte mit einer aromadichten Außenumhüllung aus in der Regel Folie oder Papier, einem sogenannten Dichtblock, der häufig über sogenannte Kuvertfaltungen verfügt, wird in der Regel der Packungsinhalt, wie etwa eine Innenpackung, in der sich Tabakprodukte befinden, mit einem flachen Zuschnitt aus Folie oder Papier schlauchförmig umhüllt.

Es ist dabei bekannt, endständige Schlauchlappen des flachen Zuschnitts überlappend übereinanderzulegen und mittels Wärme und Druck zu einer (dichten) Quernaht zu verbinden, insbesondere durch Siegeln. Das Verbinden erfolgt dabei in der Regel mit einem Heizorgan, das unter Erzeugung von Druck gegen die sich überlappenden Schlauchlappen fährt. Der für einen ausreichenden Druckaufbau während des Verbindens notwendige Gegendruck kann im Mittelbereich der sich überlappenden Schlauchlappen durch die Innenpackung erzeugt werden, insofern dieser während des Verbindungsvorgangs dort aufliegt. In äußeren Endbereichen der sich überlappenden Schlauchlappen könnten seitliche Bahnführungen den Gegendruck aufbringen. Allerdings würde beispielsweise von Innenpackungen mit abgerundeten Längskanten im Übergangsbereich zwischen dem jeweiligen vorgenannten Endbereich der sich überlappenden Schlauchlappen einerseits und dem Mittelbereich derselben andererseits kein ausreichender Gegendruck bewirkt werden, denn dort fehlt es an einer entsprechenden Auflagefläche bzw. einem Gegenlager. Entsprechend könnte es aufgrund mangelhafter Verbindung in diesen Bereichen zu Undichtigkeiten der Quernaht und in der Folge beispielsweise zu Aromaverlust kommen.

Es ist Aufgabe der vorliegenden Erfindung, das eingangs genannte Verfahren und die eingangs genannte Vorrichtung weiterzuentwickeln.

Diese Aufgabe wird gelöst durch ein Verfahren mit den Merkmalen des Anspruchs 1 sowie eine Vorrichtung mit den Merkmalen des Anspruchs 14.

Demnach ist das erfindungsgemäße Verfahren dadurch gekennzeichnet, dass insbesondere in der Verbindungsstation eine der ersten Seite gegenüberliegende zweite Seite der sich überlappenden Abschnitte an einem vorzugsweise bewegbaren Stützorgan durch Relativbewegung zwischen dem Stützorgan und den sich überlappenden Abschnitten zur Anlage gebracht wird, sodass das Stützorgan während des Aufbringen des Drucks die sich überlappenden Abschnitte mindestens bereichsweise stützt und dabei einen dem Druck entgegengerichteten, insbesondere das Verbinden ermöglichenden Gegendruck bewirkt.

Erfindungsgemäß kann auf diese Weise, nämlich durch den Einsatz eines solchen relativ zu den sich überlappenden Abschnitten - beispielsweise den sich überlappenden Schlauchlappen der eingangs genannten Außenumhüllung - bewegbaren Stützorgans somit auch in solchen Bereichen der sich überlappenden Abschnitte ein eine gute Verbindung ermöglichender Gegendruck bewirkt werden, in denen dies ansonsten aufgrund konstruktiver oder technischer Gegebenheiten nicht oder nur sehr eingeschränkt möglich wäre. Beispielsweise könnte das Stützorgan gerade in den eingangs erwähnten Übergangsbereichen zwischen Mittelbereich und jeweiligem Endbereich der sich überlappenden Schlauchlappen als entsprechendes Gegenlager bzw. Auflage-/Anlageelement für diese Übergangsbereiche eingesetzt werden.

Gemäß einer bevorzugten Ausführungsform der Erfindung kann im Übrigen vorgesehen sein, dass in der Verbindungsstation sogar (mindestens) zwei solcher vorzugsweise bewegbaren Stützorgane vorgesehen sind, die dann jeweils durch Relativbewegung zwischen dem jeweiligen Stützorgan und den sich überlappenden Abschnitten an der zweiten Seite der sich überlappenden Abschnitten zur Anlage gebracht werden, sodass sie jeweils die sich überlappenden Bereiche mindestens bereichsweise stützen und dabei jeweils einen solchen Gegendruck bewirken.

Was den (Verbindungs-)Druck und die (Verbindungs-)Wärme betrifft, die für die Verbindung der sich überlappenden Abschnitte verwendet werden, so werden diese vorzugsweise durch ein Heizorgan bewirkt, wobei zu diesem Zweck die erste Seite der sich überlappenden Abschnitte durch Relativbewegung zwischen dem Heizorgan und den sich überlappenden Abschnitten zur Anlage an das Heizorgan gebracht wird. Dies insbesondere, indem das Heizorgan an die insbesondere ortsfeste erste Seite der sich überlappenden Abschnitte heranbewegt wird. Alternativ kann aber auch vorgesehen sein, dass das oder jedes Stützorgan die sich überlappenden Abschnitte unter Mitnahme derselben an das dann insbesondere ortsfeste Heizorgan heranbewegt und die erste Seite der sich überlappenden Abschnitte dabei an das Heizorgan anlegt. Beispielsweise, indem das Stützorgan während dieser Mitnahme an der zweiten Seite der sich überlappenden Stützorgane anliegt.

Was das Heizorgan betrifft, so kann es einen insbesondere balkenförmigen Heizkörper aufweisen. Dabei kann vorgesehen sein, dass die beispielsweise mittels elektrischer Energie erzeugte Wärme des Heizkörpers als Kontaktwärme direkt auf die sich überlappenden Abschnitte übertragen wird. Das Heizorgan könnte aber unter anderem auch als Ultraschallsonotrode ausgebildet sein, die die entsprechende Wärme durch Beaufschlagen der sich überlappenden Abschnitte mit Ultraschall unmittelbar innerhalb der sich überlappenden Abschnitte erzeugt.

Gemäß einer weiteren Ausführungsform der Erfindung kann im Übrigen vorgesehen sein, dass auch das oder jedes Stützorgan Wärme in die sich überlappenden Abschnitte einbringt, während sie diese stützt.

Die sich überlappenden Abschnitte können, wie bereits erwähnt, vorzugsweise Teile eines eine Innenpackung oder eine Gruppe von Innenpackungen während des Verbindens schlauchförmig umgebenden, für diese eine Außenumhüllung bildenden Zuschnitts sein, die für die Bildung einer Quernaht dieser Außenumhüllung in der Verbindungsstation miteinander verbunden werden.

Im Rahmen der Fertigung der Packungen kann im Übrigen vorteilhafterweise vorgesehen sein, dass der Zuschnitt derart orientiert zu der Verbindungsstation gefördert wird, dass dabei die Längserstreckung der sich überlappenden Abschnitte quer zur Förderrichtung ausgerichtet ist.

Weiter kann vorgesehen sein, dass das oder jedes Stützorgan im Rahmen einer Bewegung quer zur Förderrichtung des Zuschnitts unter Anheben mindestens eines Bereichs der sich überlappenden Abschnitte von einer Ausgangsstellung, in der es die sich überlappenden Abschnitte nicht stützt, in eine Stützstellung überführt wird, in der es die sich überlappenden Abschnitte unter Anlage an die zweite, insbesondere untere Seite der sich überlappenden Abschnitte stützt.

Das oder jedes Stützorgan kann, um während des Verbindens der sich überlappenden Abschnitte den Gegendruck zu bewirken, eine Stützfläche zur Anlage an die zweite Seite der sich überlappenden Abschnitte aufweisen, die in der Verbindungsstation durch Relativbewegung aus einer Ausgangsposition in eine Stützposition bewegt wird, in der die zweite Seite der sich überlappenden Abschnitte an ihr anliegt. Dabei kann die Relativbewegung eine Bewegung umfassen, beispielsweise als Bewegungskomponente bzw. als Teilbewegung, bei der die oder jede Stützfläche parallel zur Längserstreckung der sich überlappenden Abschnitte bewegt wird.

Insofern mehrere Stützorgane vorgesehen sind, kann jedes Stützorgan jeweils, bevorzugt von gegenüberliegenden Seiten des Zuschnitts kommend, aus einer bzw. der jeweiligen Ausgangsstellung, in der es jeweils die sich überlappenden Abschnitte nicht stützt, in eine bzw. die Stützstellung überführt werden, in der es jeweils einen eigenen, ihm zugeordneten Bereich der zweiten, vorzugsweise unteren Seite der sich überlappenden Abschnitte unter jeweiliger Anlage an diesen Bereich stützt, der sich von dem durch das jeweils andere Stützorgan gestützten Bereich unterscheidet.

Die Stützorgane können des Weiteren in ihren Stützstellungen gemeinsam die sich überlappenden Abschnitte über deren gesamte Längserstreckung stützen, insbesondere über die gesamte Längserstreckung der durch sie gebildeten oder zu bildenden (späteren) Quernaht der Außenumhüllung.

Weiter kann vorgesehen sein, dass die Stützflächen der Stützorgane während des gemeinsamen Stützens der sich überlappenden Abschnitte entlang deren gesamter Längserstreckung lückenlos oder im Wesentlichen lückenlos nebeneinander angeordnet sind, vorzugsweise unterhalb der sich überlappenden Abschnitte.

Gemäß einer weiteren Konkretisierung der Erfindung kann vorgesehen sein, dass der Zuschnitt im Rahmen der Fertigung der Packungen zusammen mit einer Innenpackung oder einer Gruppe von Innenpackungen, die er unter Bildung von die sich überlappenden Abschnitte bildenden, endständigen, sich überlappenden Schlauchlappen schlauchförmig umhüllt, mit an zwei gegenüberliegenden Seiten abstehenden Längslappen, die in Bereichen gegenüberliegender Längsseiten aus Überständen des Zuschnitts entstanden sind, zu der Verbindungsstation gefördert wird, in der das oder jedes Stützorgan die sich überlappenden Schlauchlappen mindestens bereichsweise stützt. Das Stützen kann dabei insbesondere in sich gegenüberliegenden Endabschnitten der sich überlappenden Schlauchlappen erfolgen, während der Druck für das Verbinden der sich überlappenden Schlauchlappen aufgebracht wird.

Dabei kann vorgesehen sein, dass die sich überlappenden Schlauchlappen im Rahmen der Fertigung der Packungen in einem, mehreren oder dem Bereich, in dem sie in der Verbindungsstation gestützt werden, erstmalig in der Verbindungsstation unter Verwendung von Druck (und unter entsprechendem Gegendruck) und Wärme - bei gleichzeitiger Stützung während des Verbindens - miteinander verbunden werden. Ein solches Verbinden würde demnach in diesem Fall mit anderen Worten stromauf der Verbindungsstation in diesem oder diesen Bereichen nicht erfolgen.

Alternativ können die sich überlappenden Schlauchlappen im Rahmen der Fertigung der Packungen aber auch in einem, mehreren oder dem Bereich, in dem sie in der Verbindungsstation dann gestützt und unter Verwendung von Druck und Wärme verbunden werden, bereits erstmalig stromauf der Verbindungsstation unter Verwendung von Druck und Wärme bei gleichzeitiger Stützung während des Verbindens verbunden wurden, insbesondere vor- oder endverbunden. So etwa in einer stromauf angeordneten weiteren Verbindungsstation.

Es kann weiter vorgesehen sein, dass die sich überlappenden Schlauchlappen im Rahmen der Fertigung der Packungen in einem, mehreren oder dem Bereich, in dem/in denen sie in der Verbindungsstation nicht gestützt und nicht unter Verwendung von Druck und Wärme miteinander verbunden werden, bereits stromauf der Verbindungsstation unter Verwendung von Druck und Wärme sowie gleichzeitiger Stützung während des Verbindens miteinander verbunden wurden, insbesondere endverbunden. Mit anderen Worten kann es Bereiche der sich überlappenden Schlauchbereiche geben, die bereits stromauf der Verbindungsstation, beispielsweise in einer stromauf angeordneten weiteren Verbindungsstation, in der beschriebenen Weise (end-)verbunden wurden und in der Verbindungsstation nicht erneut verbunden werden.

Es kann in weiterer Konkretisierung vorgesehen sein, dass die sich überlappenden Schlauchlappen im Rahmen der Fertigung der Packungen in dem oder jedem Bereich, in dem sie in der Verbindungsstation gestützt werden, stromauf der Verbindungsstation durch ein insbesondere weiteres, vorzugsweise einen balkenförmigen Heizkörper umfassendes Heizorgan vorverbunden werden, insbesondere vorgesiegelt oder vorgeschweißt, und dann danach in der Verbindungsstation in diesem oder jedem gestützten Bereich durch das Heizorgan endverbunden werden, insbesondere endgesiegelt oder endgeschweißt.

Alternativ oder zusätzlich kann vorgesehen sein, dass die sich überlappenden Schlauchlappen im Rahmen der Fertigung der Packungen in einem, mehreren oder jedem Bereich, in dem sie in der Verbindungsstation nicht gestützt werden, stromauf der Verbindungsstation durch ein insbesondere weiteres, vorzugsweise einen balkenförmigen Heizkörper umfassendes Heizorgan endverbunden werden, insbesondere endgesiegelt oder endgeschweißt. Vorzugsweise, indem dabei dieser Bereich oder jeder dieser Bereiche auf der zweiten Seite der sich überlappenden Schlauchlappen an der Innenpackung oder der Gruppe von Innenpackungen anliegt, sodass die sich überlappenden Schlauchlappen von dieser gestützt werden und von dieser ein das Endverbinden ermöglichender Gegendruck bewirkt wird.

In der Praxis kann es zusammenfassend ein oder mehrere Bereiche der sich überlappenden Schlauchlappen geben, die in der Verbindungsstation in der oben beschriebenen Weise erstmalig miteinander verbunden werden und/oder ein oder mehrere Bereiche, die bereits stromauf derselben auf diese Weise (vor)verbunden wurden und die in der Verbindungsstation dann (erneut) (end-)verbunden werden, sowie Bereiche, die stromauf der Verbindungsstation auf diese Weise bereits (end-)verbunden wurden und die in der Verbindungsstation nicht erneut verbunden werden.

Gemäß einer weiteren Ausführungsform der Erfindung kann gemäß weiterer Konkretisierung vorgesehen sein, dass die sich überlappenden Schlauchlappen stromauf der Verbindungsstation in einem Bereich unter Verwendung von Druck und Wärme miteinander verbunden, insbesondere endverbunden werden, in dem sie während des Aufbringens des Drucks auf der zweiten Seite durch eine Gegendruck bewirkende Seite der Innenpackung oder der Gruppe von Innenpackungen gestützt sind. In der Verbindungsstation können dann dieser bereits verbundene Bereich der sich überlappenden Schlauchlappen und ein an diesen Bereich angrenzender Bereich, in dem die sich überlappenden Schlauchlappen stromauf der Verbindungsstation entweder nicht verbunden wurden oder während der Verwendung von Druck und Wärme im Rahmen des entsprechenden Verbindungsvorgangs zumindest nicht auf ihrer zweiten Seite unter Erzeugung von Gegendruck gestützt wurden, gemeinsam an das Stützorgan zur Anlage gebracht und durch das Stützorgan gestützt werden, während diese Bereiche der sich überlappenden Schlauchlappen jeweils unter Verwendung von Druck und Wärme verbunden werden, insbesondere mittels eines oder des Heizorgans, das das gleichzeitig in beiden Bereichen Druck und Wärme bewirkt.

Eine erfindungsgemäße Vorrichtung, insbesondere eine solche, die sich zur Durchführung des vorgenannten Verfahrens eignet, zeichnet sich unter anderem dadurch aus, dass die Verbindungsstation entsprechend ein während des Aufbringen des Drucks die sich überlappenden Abschnitte mindestens bereichsweise stützendes und dabei einen insbesondere die Verbindung der sich überlappenden Abschnitte ermöglichendes, Gegendruck bewirkendes Stützorgan aufweist, an das eine der ersten Seite gegenüberliegende zweite Seite der sich überlappenden Abschnitte durch Relativbewegung zwischen dem Stützorgan und den sich überlappenden Abschnitten zur Anlage bringbar ist, insbesondere ein zum Zweck der Relativbewegung bewegbares Stützorgan.

Weitere Merkmale der Erfindung ergeben sich aus den beigefügten Patentansprüchen, der nachfolgenden Beschreibung bevorzugter Ausführungsbeispiele sowie aus den beigefügten Zeichnungen. Darin zeigt:

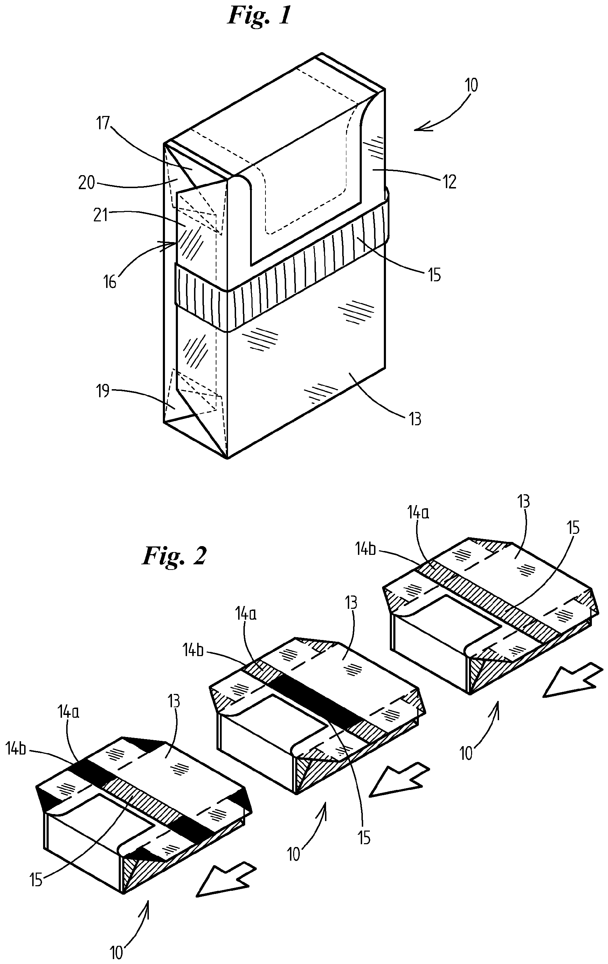

- Fig. 1: eine Innenpackung in Schrägansicht mit einer Außenumhüllung aus Folie oder (beschichtetem) Papier mit Kuvertfaltung, die über eine Quernaht aus sich überlappenden Schlauchlappen verfügt, die mit dem erfindungsgemäßen Verfahren verbunden wurden,
- Fig. 2: eine skizzenhafte Schrägansicht einzelner Verfahrensschritte zur Herstellung der Quernaht der Packung aus Figur 1,
- Fig. 3: einzelne, entlang einer Förderstrecke angeordnete Arbeitsstationen zur Herstellung der Quernaht der Packung, ebenfalls in Schrägansicht,
- Fig. 4: eine Schnittansicht entlang der Schnittebene IV-IV in Fig. 3,
- Fig. 5: eine Schnittansicht entlang der Schnittebene V-V in Fig. 4,
- Fig. 6: eine Schnittansicht entlang der Schnittebene VI-VI in Fig. 3,
- Fig. 7: eine Schnittansicht entlang der Schnittebene VII-VII in Fig. 3,
- Fig. 8: eine Schnittansicht entlang der Schnittebene VIII-VIII in Fig. 7,
- Fig. 9: eine Schnittansicht entlang der Schnittlinie IX-IX in Fig. 6,
- Fig. 10: eine Schnittansicht entlang der Schnittebene X-Xin Fig. 6,

Ein bevorzugtes Anwendungsgebiet für das erfindungsgemäße Verbindungsverfahren ist die Herstellung von in den Zeichnungen dargestellten Packungen 10, sogenannten Dichtpackungen für Zigaretten oder andere rauchbare Produkte, bei denen eine Innenpackung 11, in der Regel aus formstabilem Material, beispielsweise Karton, mit einer dichten Außenpackung bzw. Außenumhüllung 12 umgeben ist, die unter anderem dafür sorgt, dass das Aroma der in den Packungen 10 enthaltenen rauchbaren Produkte nicht verfliegt. Das erfindungsgemäße Verbindungsverfahren ist darauf aber nicht beschränkt. Unter anderem könnte es beispielsweise auch für die Fertigung von Gebindepackungen eingesetzt werden, bei denen eine gemeinsame Außenumhüllung eine Gruppe von Packungen mit jeweils rauchbaren Produkten umhüllt.

Die vorliegende quaderförmige Außenumhüllung 12 ist aus einem flachen Zuschnitt 13 gefertigt, der (nicht gezeigt) im Rahmen der Fertigung der Packungen 10 jeweils um eine bereits fertig gestellte Innenpackung 11 u-förmig herum gefaltet wird und in einer schlauchförmigen Faltstellung sich überlappende (End-)Abschnitte, nämlich sich überlappende Schlauchlappen 14 a, 14 b bzw. aufweist, die unter Bildung einer Quernaht 15 miteinander verbunden werden, wie später noch näher erläutert wird.

Aufgrund der Abmessung des flachen Zuschnitts 13 entstehen zudem in den Bereichen gegenüberliegender Längsseiten der Packung 10 als Faltlappen ausgebildete Überstände des Zuschnitts 13, die (nicht gezeigt) mittels einer ein oder mehrere Faltorgane umfassenden Falteinrichtung jeweils zu einer sogenannten Kuvertfaltung 16 gefaltet werden. Die Kuvertfaltungen 16 bilden dabei im Ergebnis die jeweilige Längsseitenwandung der Außenumhüllung 12.

Jede der beiden, an gegenüberliegenden Längsseiten der Außenumhüllung 12 gebildeten Kuvertfaltungen 16 umfasst dabei jeweils zwei Innenlappen bildende Querseitenfaltlappen 17, die jeweils gegen eine jeweilige Längsseite 18 der Innenpackung 11 gefaltet sind, jeweils an jedem Querseitenfaltlappen 17 zwei angrenzende, dreieckförmige Faltlappen 19, die jeweils wiederum von außen gegen jeweils eine der Querseitenfaltlappen 17 gefaltet ist, sowie jeweils zwei Außenlappen bildende innere und äußere Längsseitenfaltlappen 20 bzw. 21. Dabei liegen an jedem der Längsseitenfaltlappen 20 und 21 jeweils im Bereich gegenüberliegender Enden zwei der dreieckförmigen Faltlappen 19 innenseitig an unter teilweiser Überdeckung der Querseitenfaltlappen 17.

Die Außenumhüllung 12 und somit auch der Zuschnitt 13, aus dem die Außenumhüllung 12 gefertigt wird, besteht in der Regel aus dünnem Material. In dem vorliegenden Ausführungsbeispiel werden Zuschnitte aus (Kunststoff-)Folie verwendet, es können aber beispielsweise auch Zuschnitte aus dünnem Papier eingesetzt werden.

Die einzelnen, übereinander liegenden Faltlappen 17, 19, 20, 21 der Kuvertfaltung 16, aber auch die sich überlappenden Schlauchlappen 14 a, 14 b werden jeweils unter Einbringen bzw. unter Verwendung von Wärme und Druck miteinander verbunden. Bei der Verwendung von siegelbarer Folie, wie im vorliegenden Ausführungsbeispiel, kann dies beispielsweise durch thermisches Siegeln erfolgen.

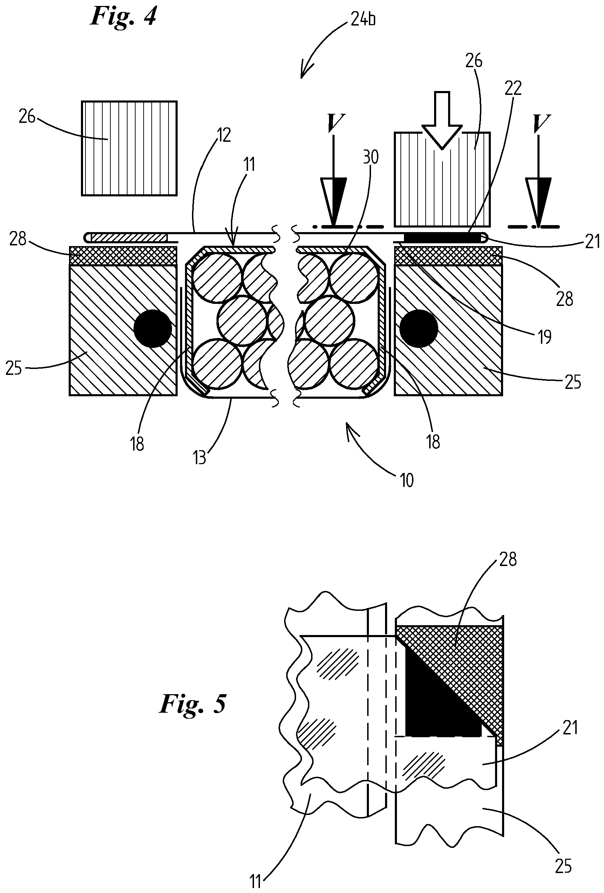

Bei der Verwendung von Papier wäre jeweils eine Papierseite, zumindest aber jeweils eine Seite der miteinander zu verklebenden Falt- bzw. Zuschnittlappen 14 a-b, 17, 19, 20, 21 in der Regel mit einer Schicht 22 aus Heißklebstoff versehen, vgl. Fig. 4, die entsprechend durch Verbindungswärme in klebefähigen Zustand versetzt wird. Es versteht sich aber, dass zur Verbindung theoretisch auch Schweißverfahren, wie etwa Ultraschallschweißen, verwendet werden könnten.

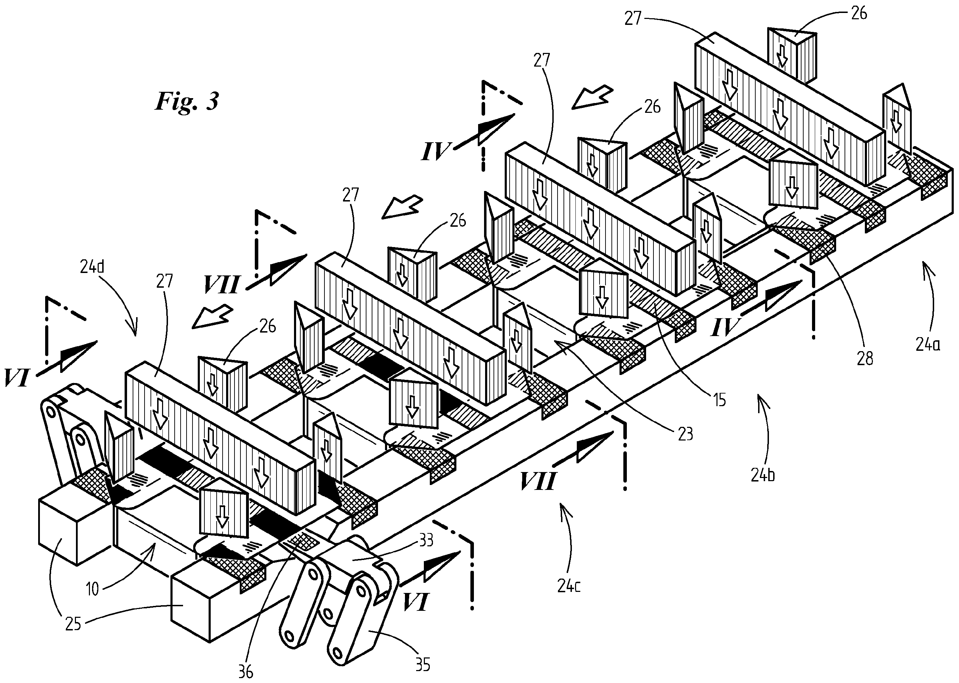

In der Fig. 3 ist ein Teilabschnitt der Fertigung der Packungen 10 gezeigt, bei dem entlang einer vorliegend geradlinigen Transport- oder Förderstrecke 23 die bereits in ihrer überlappenden Faltstellung befindlichen Schlauchlappen 14 a-b miteinander verbunden werden sowie die dreieckförmigen Faltlappen 19 mit den äußeren Längsseitenfaltlappen 21.

Dieses Verbinden erfolgt in mehreren, in Förderrichtung aufeinanderfolgenden Arbeits- bzw. Verbindungsstationen 24 a-d, in denen einzelne miteinander zu verbindenden Bereiche der Schlauchlappen 14 a-b bzw. der dreieckförmigen Faltlappen 19 und Längsseitenfaltlappen 21 jeweils durch Siegeln, insbesondere Vor- und/oder Endsiegeln, miteinander verbunden werden.

Die einzelnen Verbindungsstationen 24 a-d sind entlang einer (geradlinigen) Förderstrecke 23 angeordnet, die im vorliegenden Fall zwei parallele, mit Abstand zueinander angeordnete, ortsfeste Längsführungen 25 aufweist, zwischen denen einzelne Innenpackungen 11, umhüllt mit einer teilweise fertig gestellten, aus dem Zuschnitt 13 gefalteten Außenumhüllung 12, mittels eines nicht dargestellten Förderers taktweise gefördert werden, und zwar mit von gegenüberliegenden Seiten des Zuschnitts 13 bzw. der Außenumhüllung 12 seitlich abstehenden, sich noch nicht in ihrer jeweiligen Endstellung befindlichen äußeren Längsseitenfaltlappen 21, die während des Transports auf Oberseiten der Längsführungen 25 gleitend aufliegen bzw. geführt werden.

Dabei ist die Längserstreckung der zu Beginn der Förderstrecke 13 noch unverbundenen, sich allerdings bereits durch vorhergehende Faltung überlappenden Schlauchlappen 14 ab quer zur Förderrichtung ausgerichtet.

In der in Förderrichtung ersten Verbindungsstation 24 a wird dann jeder der beiden äußere Längsseitenfaltlappen 21 zum einen mittels eines von vier Heizorganen 26 mit jeweils einem im Querschnitt dreieckförmigem Heizkörper mit einem der vier dreieckförmigen Faltlappen 19 verbunden, und zwar konkret jeweils ein Endbereich des jeweiligen äußeren Längsseitenfaltlappens 21 mit jeweils einem dreieckförmigen Faltlappen 19.

Zu diesem Zweck wurden die äußeren Längsseitenfaltlappen 21 zuvor (nicht gezeigt) unter Bildung einer jeweiligen Doppellage der Außenumhüllung 12 auf den jeweils zugeordneten dreieckförmigen Faltlappen 19 gefaltet, und zwar unter Anlage an den jeweiligen Faltlappen 19.

Für die anschließende Verbindung werden dann die vier Heizorgane 26 jeweils unter Aufbringen von Druck und Einbringen von Wärme im Bereich der vorgenannten Doppellage jeweils während einer Stillstandsphase zwischen zwei Bewegungstakten von oben gegen eine erste Seite der äußeren Längsseitenfaltlappen 21 bewegt, und zwar derart, dass der jeweilige dreieckförmige Faltlappen 19 hierdurch zu einem gewissen Grad mit dem jeweiligen äußeren Längsseitenfaltlappen 21 vorverbunden wird.

Der für die Erzeugung einer ordnungsgemäßen Verbindung während des Aufbringens des Drucks durch die Heizorgane 26 jeweils erforderliche Gegendruck wird dabei von den Längsführungen 25 aufgebracht, auf denen die jeweilige Doppellage während des Verbindungsvorgangs aufliegt. Konkret liegt die jeweilige Doppellage dabei auf einer streifenförmigen (nachgiebigen) Unterlage 28 auf, über die die Längsführungen 25 im Bereich der jeweiligen Doppellage auf ihrer jeweiligen Oberseite verfügen, vgl. beispielsweise Fig. 4.

In ganz ähnlicher Weise werden in der ersten Verbindungsstation 24 a auch die beiden sich überlappenden Schlauchlappen 14 a-b zumindest bereichsweise miteinander vorverbunden, und zwar durch ein Heizorgan 27 mit einem balkenförmigen Heizkörper, der sich vorliegend entlang der gesamten Längserstreckung der sich überlappenden Schlauchlappen 14 a-b bzw. der (späteren) Quernaht 15 erstreckt, und zwar in derselben (vertikalen) Ebene mit Abstand zu diesen (oberhalb derselben).

Auch das Heizorgan 27 wird - unter Aufbringen von Druck und Einbringen von Wärme - auf die sich überlappenden Schlauchlappen 14 a-b abgesenkt bzw. von oben gegen eine erste, nämlich vorliegend obere Seite der sich überlappenden Schlauchlappen 14 a-b bewegt bis das Heizorgan 27 an dieser ersten Seite der sich überlappenden Schlauchlappen 14 a-b anliegt.

Der für die (Vor-)Verbindung erforderliche Gegendruck wird in der Verbindungsstation 24 a durch eine bzw. die obere Wandung 30 der Innenpackung 11 sowie durch einzelne Abschnitte der Längsführungen 25 mit entsprechenden, ebenfalls streifenförmigen und nachgiebigen Unterlagen 28 erzeugt bzw. bewirkt, auf denen die sich überlappenden Schlauchlappen 14 a-b in bestimmten Bereichen während dieses Verbindungsvorgangs aufliegen und durch die diese dort gestützt werden.

In der Verbindungsstation 24 b, zu der die jeweilige Innenpackung 11 zusammen mit der Außenumhüllung 12 danach weitergefördert wird, erfolgen im Wesentlichen noch einmal die gleichen Verbindungsvorgänge, wobei die Stärke der einzelnen Verbindungen jeweils durch das erneute Einbringen von Wärme und Druck erhöht wird. Es versteht sich im Übrigen, dass auch denkbar ist, auf eine solche weitere, im Wesentlichen gleichartige Verbindungsstation 24 b zu verzichten und stattdessen beispielsweise die Dauer des Einwirkens der Heizorgane 26 bzw. 27 in der Verbindungsstation 24 a zu verlängern.

In der stromab angeordneten weiteren Verbindungsstation 24 c wird danach durch das erneute Aufbringen bzw. Einbringen von Druck und Wärme bereits ein mittlerer Streifen bzw. Bereich 29 der sich überlappenden Schlauchlappen 14 a-b endverbunden.

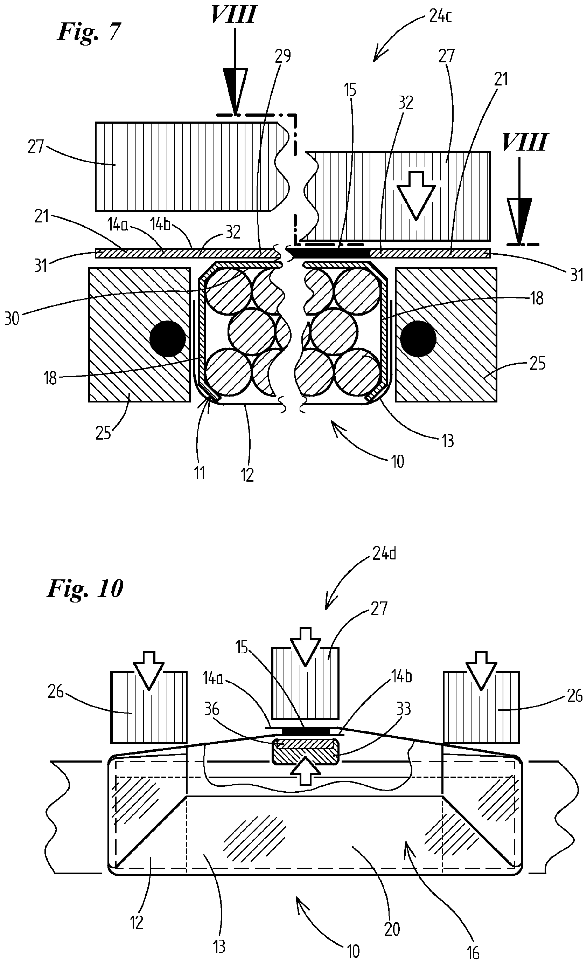

Dabei erfährt der mittlere Bereich 29 in der Verbindungsstation 24 c, wie auch in den vorherigen Verbindungsstationen 24 a und b, einen Gegendruck durch die relativ unnachgiebige Innenpackung 11 bzw. deren obere Wandung 30, vgl. auch Fig. 7.

Im Gegensatz dazu werden gegenüberliegende, im Bereich der äußeren Längsseitenfaltlappen 21 angeordnete Endbereiche 31 der Schlauchlappen 14 a-b nicht erneut mit Druck beaufschlagt, da in der Verbindungsstation 24 c in diesen Endbereichen 31 kein Gegendruck aufgebracht wird. Denn in der Verbindungsstation 24 c liegen die Endbereiche 31, während das Heizorgan 27 von oben an die obere Seite der sich überlappenden Schlauchlappen 14 a-b bewegt wird, nicht auf den Längsführungen 25 auf, sondern sind dabei mit Abstand oberhalb derselben angeordnet (die streifenförmigen Unterlagen 28 der Längsführungen 25 fehlen), vgl. ebenfalls Fig. 7, sodass entsprechend keine Stützung durch die Längsführungen 25 erfolgt.

Gleiches gilt insbesondere auch für Übergangsbereiche 32 der sich überlappenden Schlauchlappen 14 a-b, die sich zwischen der Oberseite der jeweiligen Längsführung 25 und der oberen Wandung 30 der Innenpackung 11 erstrecken und in denen ebenfalls mangels Stützung auf die sich überlappenden Schlauchlappen 14 a-b kein Gegendruck wirkt.

Um nun insbesondere in den Übergangsbereichen 32, aber zugleich auch in den Endbereichen 31 der sich überlappenden Schlauchlappen 14 a-b, eine ausreichende Verbindung zu bewirken, ist erfindungsgemäß vorgesehen, diese Bereiche in der nachfolgenden Verbindungsstation 24 d in besonderer Weise zu stützen, während sie (bzw. die obere Seite derselben) mit dem Heizorgan 27 der Verbindungstation 24 d von oben mit Druck und Wärme beaufschlagt werden.

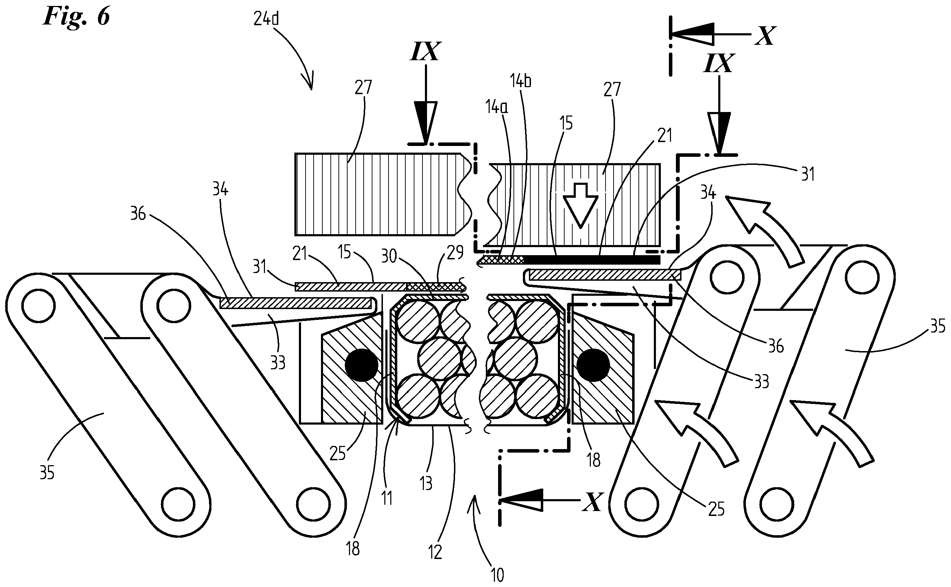

Hierzu sind in der Verbindungsstation 24 d zwei an den gegenüberliegenden Längsseiten des Zuschnitts 13 angeordnete, bewegbare Stützorgane 33 vorgesehen. Diese können jeweils mittels eines geeigneten Getriebes 35 (vorliegend ein Parallelogrammgetriebe) und eines entsprechenden Antriebsmotors (nicht gezeigt) aus einer Ausgangsposition, vgl. Fig. 6, linke Hälfte, in der die sich überlappenden Schlauchlappen 14 a-b in den Bereichen 31 und 32 nicht gestützt werden, in eine Stützposition bewegt werden, vgl. Fig. 6, rechte Hälfte, in der diese Bereiche 31 und 32 durch das jeweilige Stützorgan 33 gestützt bzw. in Position gehalten werden, während das Heizorgan 27 Druck ausübt.

Konkret wird dabei jeweils im Rahmen bzw. am Ende der Bewegung des jeweiligen Stützorgans 33 eine (obere) durch eine nachgiebige Unterlage 36 gebildete Stützfläche 34 des jeweiligen Stützorgans 33 an die der ersten, oberen Seite der sich überlappenden Schlauchlappen 14 a-b gegenüberliegende zweite, untere Seite der sich überlappenden Schlauchlappen 14 a-b angelegt. Dies im Rahmen einer Bewegung quer zur Förderrichtung der jeweiligen, mit der Außenumhüllung 12 jeweils umhüllten Innenpackung 11.

Die Bewegung der Stützorgane 33 aus der Ausgangsstellung in die Stützstellung erfolgt dabei vorliegend jeweils unter Anheben der sich überlappenden Schlauchlappen 14 a-b, vgl. Fig. 10, sodass das jeweilige Stützorgan 33 bzw. deren jeweilige Stützfläche 34 - von der Seite kommend - in einen sich hierdurch vergrößernden oder erst ergebenden Freiraum zwischen den sich überlappenden Schlauchlappen 14 a-b und den Längsführungen 25 bzw. der Innenpackung 11 eintauchen kann.

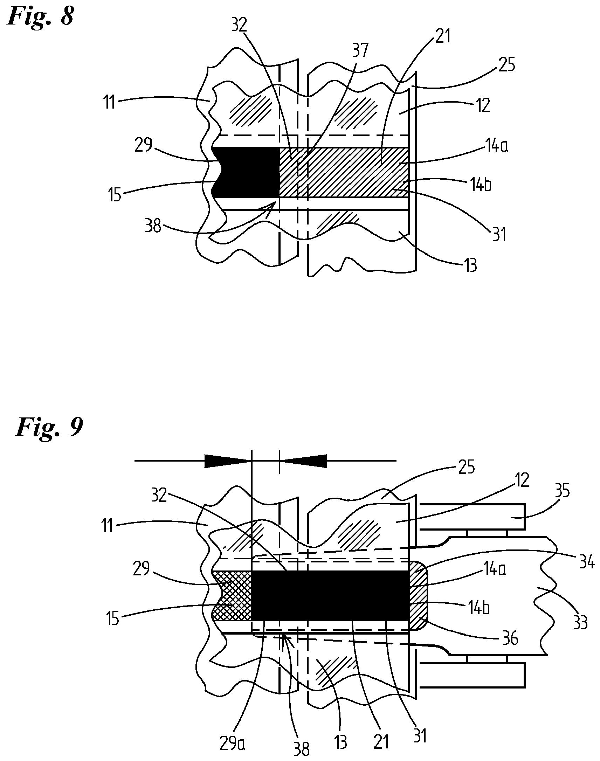

Wie in Fig. 8 und 9 zu erkennen ist, stützen die Stützorgane 33 der Verbindungsstation 24 d aber nicht nur die Endbereiche 31 und die angrenzenden Übergangsbereiche 32 der sich überlappenden Schlauchlappen 14 a-b, sondern auch vorsorglich jeweils einen an den jeweiligen Übergangsbereich 32 angrenzenden Abschnitt 29 a des mittleren Bereichs 29.

Entsprechend werden auch diese angrenzenden Abschnitte 29 a der sich überlappenden Schlauchlappen 14 a-b (nochmals) mit Wärme und Druck des Heizorgans 27 sowie mit entsprechendem Gegendruck (hier des Stützorgans 33) beaufschlagt. Dies, obwohl der mittlere Bereich 29, vgl. oben, stromauf der Verbindungsstation 24 d in der Verbindungsstation 24 c im Normalfall bereits entsprechend endverbunden wurde.

Durch diese Maßnahme wird sichergestellt, dass auch ein Grenzbereich 38, der (beidseits) die Grenze 37 zwischen den Bereichen 29 a und 32 umfasst, sicher endverbunden wird. Ohne diese Maßnahme könnte es ansonsten passieren, dass beispielsweise aufgrund von Positionstoleranzen der Relativpositionen zwischen dem jeweiligen Heizorgan 27 und den jeweils zu verbindenden Bereichen der sich überlappenden Schlauchlappen 14 a-b oder aufgrund ähnlicher Ungenauigkeiten bei den nacheinander in den Verbindungsstationen 24 c und d ablaufenden Verbindungsprozessen jeweils im Bereich der genannten Grenze 37 zwischen den Bereichen 29 a und 32 nur ungenügend verbundene oder gar nicht endverbundene Bereiche verbleiben, in denen hierdurch jeweils Undichtigkeiten der Außenumhüllung 12 auftreten können.

Es kann im Übrigen auch vorgesehen sein, dies ist aber nicht zwingend, dass die Stützorgane 33 in ihren Stützstellungen gemeinsam die sich überlappenden Schlauchlappen 14 a-b über deren gesamte Längserstreckung stützen, insbesondere über die gesamte Längserstreckung der durch sie gebildeten oder zu bildenden (späteren) Quernaht 15 der Außenumhüllung 12. Beispielsweise, indem die Stützflächen 34 der Stützorgane 33 der sich überlappenden Schlauchlappen 14 a-b während des gemeinsamen Stützens entlang deren gesamter Längserstreckung im Wesentlichen lückenlos nebeneinander angeordnet sind, vorzugsweise unterhalb der sich der sich überlappenden Schlauchlappen 14 a-b.

Im vorliegenden Fall könnten sich die nachgiebigen Unterlagen 36 der Stützorgane 33 dann beispielsweise in ihren Stützstellungen mittig oberhalb der Förderstrecke 23 bzw. oberhalb der jeweiligen Außenumhüllung 12 treffen, wobei sie vorteilhafterweise miteinander fluchtend nebeneinander in derselben horizontalen Ebene angeordnet wären.

### Bezugszeichenliste:

| | | | |
|---|---|---|---|
| 10 | Packung | 35 | Getriebe |
| 11 | Innenpackung | 36 | nachgiebige Unterlage |
| 12 | Außenumhüllung | 37 | Grenze |
| 13 | Zuschnitt | 38 | Grenzbereich |
| 14 a-b | Schlauchlappen | | |
| 15 | Quernaht | | |
| 16 | Kuvertfaltung | | |
| 17 | Querseitenfaltlappen | | |
| 18 | Längsseite Innenpackung | | |
| 19 | dreieckförmige Faltlappen | | |
| 20 | innere Längsseitenfaltlappen | | |
| 21 | äußere Längsseitenfaltlappen | | |
| 22 | Heißklebstoff | | |
| 23 | Förderstrecke | | |
| 24 a-d | Verbindungsstation | | |
| 25 | Längsführungen | | |
| 26 | dreieckförmige Heizorgane | | |
| 27 | balkenförmigen Heizorgane | | |
| 28 | nachgiebige Unterlage | | |
| 29 | mittlerer Bereich Schlauchlappen | | |
| 29 a | Teilabschnitt mittlerer Bereich | | |
| 30 | obere Wandung Innenpackung | | |
| 31 | Endbereiche Schlauchlappen | | |
| 32 | Übergangsbereich Schlauchlappen | | |
| 33 | Stützorgane | | |
| 34 | Stützfläche | | |

## Patentansprüche

1. Verfahren zum Verbinden von mindestens zwei sich überlappenden Abschnitten (14 a-b) eines oder mehrerer Zuschnitte (13) aus insbesondere siegelbarer Folie oder insbesondere siegelbarem Papier im Rahmen der Fertigung von Packungen (10), vorzugsweise für Tabakprodukte, bei dem die sich überlappenden Abschnitte (14 a-b) insbesondere in einer Verbindungsstation (24 a-d) miteinander verbunden werden unter Verwendung von Druck und Wärme, wobei der Druck auf eine erste Seite der sich überlappenden Abschnitte (14 a-b) aufgebracht wird, **dadurch gekennzeichnet, dass** insbesondere in der Verbindungsstation (24 a-d) eine der ersten Seite gegenüberliegende zweite Seite der sich überlappenden Abschnitte (14 a-b) an einem vorzugsweise bewegbaren Stützorgan (33) durch Relativbewegung zwischen dem Stützorgan (33) und den sich überlappenden Abschnitten (14 a-b) zur Anlage gebracht wird, sodass das Stützorgan (33) während des Aufbringen des Drucks die sich überlappenden Abschnitte (14 a-b) mindestens bereichsweise stützt und dabei einen dem Druck entgegengerichteten, insbesondere das Verbinden ermöglichenden Gegendruck bewirkt.

2. Verfahren gemäß Anspruch 1, **dadurch gekennzeichnet, dass** insbesondere in der Verbindungsstation (24 a-d) (mindestens) zwei solche vorzugsweise bewegbaren Stützorgane (33) vorgesehen sind, die jeweils durch Relativbewegung zwischen dem jeweiligen Stützorgan (33) und den sich überlappenden Abschnitten (14 a-b) an der zweiten Seite der sich überlappenden Abschnitten (14 a-b) zur Anlage gebracht werden, sodass sie jeweils die sich überlappenden Bereiche mindestens bereichsweise stützen und dabei jeweils einen solchen Gegendruck bewirken,
und/oder dass der Druck und die Wärme durch ein einen vorzugsweise balkenförmigen Heizkörper aufweisendes Heizorgan bewirkt werden, wobei zu diesem Zweck die erste Seite der sich überlappenden Abschnitte (14 a-b) durch Relativbewegung zwischen dem Heizorgan und den sich überlappenden Abschnitten (14 a-b) zur Anlage an das Heizorgan gebracht wird, insbesondere, indem das Heizorgan an die insbesondere ortsfeste erste Seite der sich überlappenden Abschnitte (14 a-b) heranbewegt wird oder indem das oder jedes Stützorgan (33) die sich überlappenden Abschnitte (14 a-b) unter Mitnahme derselben an das insbesondere ortsfeste Heizorgan heranbewegt und deren erste Seite an das Heizorgan anlegt, insbesondere, indem es während dieser Mitnahme an der zweiten Seite der sich überlappenden Stützorgane (33) anliegt.

3. Verfahren gemäß einem oder mehreren der vorhergehenden Ansprüche, **dadurch gekennzeichnet, dass** die sich überlappenden Abschnitte (14 a-b) Teile eines eine Innenpackung oder eine Gruppe von Innenpackungen während des Verbindens schlauchförmig umgebenden, für diese eine Außenumhüllung bildenden Zuschnitts (13) sind, die für die Bildung einer Quernaht dieser Außenumhüllung in der Verbindungsstation (24 a-d) miteinander verbunden werden,
und/oder dass der Zuschnitt (13) derart orientiert zu der Verbindungsstation (24 a-d) gefördert wird, dass dabei die Längserstreckung der sich überlappenden Abschnitte (14 a-b) quer zur Förderrichtung ausgerichtet ist.

4. Verfahren gemäß einem oder mehreren der vorhergehenden Ansprüche, **dadurch gekennzeichnet, dass** das oder jedes Stützorgan (33) eine Stützfläche zur Anlage an die zweite Seite der sich überlappenden Abschnitte (14 a-b) aufweist, die in der Verbindungsstation (24 a-d) durch Relativbewegung aus einer Ausgangsposition in eine Stützposition bewegt wird, in der die zweite Seite der sich überlappenden Abschnitte (14 a-b) an ihr anliegt, insbesondere durch Relativbewegung, die eine Bewegung umfasst, bei der die oder jede Stützfläche parallel zur Längserstreckung der sich überlappenden Abschnitte (14 a-b) bewegt wird,
und/oder dass das oder jedes Stützorgan (33) im Rahmen einer Bewegung quer zur Förderrichtung des Zuschnitts (13) unter Anheben mindestens eines Bereichs der sich überlappenden Abschnitte (14 a-b) von einer Ausgangsstellung, in der es die sich überlappenden Abschnitte (14 a-b) nicht stützt, in eine Stützstellung überführt wird, in der es die sich überlappenden Abschnitte (14 a-b) unter Anlage an die zweite, insbesondere untere Seite der sich überlappenden Abschnitte (14 a-b) stützt.

5. Verfahren gemäß einem oder mehreren der vorhergehenden Ansprüche, **dadurch gekennzeichnet, dass** jedes Stützorgan (33) jeweils, bevorzugt von gegenüberliegenden Seiten des Zuschnitts (13), aus einer jeweiligen Ausgangsstellung, in der es jeweils die sich überlappenden Abschnitte (14 a-b) nicht stützt, in eine Stützstellung überführt wird, in der es jeweils einen eigenen, ihm zugeordneten Bereich der zweiten, vorzugsweise unteren Seite der sich überlappenden Abschnitte (14 a-b) unter jeweiliger Anlage an diesen Bereich stützt, der sich von dem durch das jeweils andere Stützorgan (33) gestützten Bereich unterscheidet.

6. Verfahren gemäß Anspruch 5, **dadurch gekennzeichnet, dass** die Stützorgane (33) in ihren Stützstellungen gemeinsam die sich überlappenden Abschnitte (14 a-b) über deren gesamte Längserstreckung stützen, insbesondere über die gesamte Längserstreckung der durch sie gebildeten oder zu bildenden (späteren) Quernaht der Außenumhüllung.

7. Verfahren gemäß Anspruch 6, **dadurch gekennzeichnet, dass** die Stützflächen der Stützorgane (33) während des gemeinsamen Stützens der sich überlappenden Abschnitte (14 a-b) entlang deren gesamter Längserstreckung lückenlos oder im Wesentlichen lückenlos nebeneinander angeordnet sind, vorzugsweise unterhalb der sich überlappenden Abschnitte.

8. Verfahren gemäß einem oder mehreren der vorhergehenden Ansprüche, **dadurch gekennzeichnet, dass** der Zuschnitt (13) im Rahmen der Fertigung der Packungen (10) zusammen mit einer Innenpackung oder einer Gruppe von Innenpackungen, die er unter Bildung von die sich überlappenden Abschnitte (14 a-b) bildenden, endständigen, sich überlappenden Schlauchlappen (14 a-b) schlauchförmig umhüllt, mit an zwei gegenüberliegenden Seiten abstehenden Längslappen, die in Bereichen gegenüberliegender Längsseiten aus Überständen des Zuschnitts (13) entstanden sind, zu der Verbindungsstation (24 a-d) gefördert wird, in der das oder jedes Stützorgan (33) die sich überlappenden Schlauchlappen (14 a-b) mindestens bereichsweise stützt, insbesondere in sich gegenüberliegenden Endabschnitten der sich überlappenden Schlauchlappen (14 a-b), während der Druck für das Verbinden der sich überlappenden Schlauchlappen (14 a-b) aufgebracht wird.

9. Verfahren gemäß Anspruch 8, **dadurch gekennzeichnet, dass** die sich überlappenden Schlauchlappen (14 a-b) im Rahmen der Fertigung der Packungen (10) in einem, mehreren oder dem Bereich, in dem sie in der Verbindungsstation (24 a-d) gestützt werden, erstmalig in der Verbindungsstation (24 a-d) unter Verwendung von Druck und Wärme sowie gleichzeitiger Stützung während des Verbindens miteinander verbunden werden, oder dass die sich überlappenden Schlauchlappen (14 a-b) im Rahmen der Fertigung der Packungen (10) in einem, mehreren oder dem Bereich, in dem sie in der Verbindungsstation (24 a-d) gestützt und unter Verwendung von Druck und Wärme verbunden werden, bereits erstmalig stromauf der Verbindungsstation (24 a-d) unter Verwendung von Druck und Wärme sowie gleichzeitiger Stützung während des Verbindens verbunden wurden, insbesondere vor- oder endverbunden.

10. Verfahren gemäß Anspruch 8 oder 9, **dadurch gekennzeichnet, dass** die sich überlappenden Schlauchlappen (14 a-b) im Rahmen der Fertigung der Packungen (10) in einem, mehreren oder dem Bereich, in dem/in denen sie in der Verbindungsstation (24 a-d) nicht gestützt und nicht unter Verwendung von Druck und Wärme miteinander verbunden werden, bereits stromauf der Verbindungsstation (24 a-d) unter Verwendung von Druck und Wärme sowie gleichzeitiger Stützung während des Verbindens miteinander verbunden wurden, insbesondere endverbunden.

11. Verfahren gemäß Anspruch 10, **dadurch gekennzeichnet, dass** die sich überlappenden Schlauchlappen (14 a-b) stromauf der Verbindungsstation (24 a-d) in einem Bereich unter Verwendung von Druck und Wärme miteinander verbunden, insbesondere endverbunden werden, in dem sie während des Aufbringens des Drucks auf der zweiten Seite durch eine Gegendruck bewirkende Seite der Innenpackung oder der Gruppe von Innenpackungen gestützt sind, und dass in der Verbindungsstation (24 a-d) dieser verbundene Bereich der sich überlappenden Schlauchlappen (14 a-b) und ein an diesen Bereich angrenzender Bereich, in dem die sich überlappenden Schlauchlappen (14 a-b) stromauf der Verbindungsstation (24 a-d) entweder nicht verbunden wurden oder während der Verwendung von Druck und Wärme im Rahmen eines Verbindungsvorgangs zumindest nicht auf ihrer zweiten Seite unter Erzeugung von Gegendruck gestützt wurden, gemeinsam an das Stützorgan (33) zur Anlage gebracht und durch das Stützorgan (33) gestützt werden während diese Bereiche der sich überlappenden Schlauchlappen (14 a-b) jeweils unter Verwendung von Druck und Wärme verbunden werden, insbesondere mittels eines oder des Heizorgans, das das gleichzeitig in beiden Bereichen Druck und Wärme bewirkt.

12. Verfahren gemäß einem oder mehreren der vorhergehenden Ansprüche, **dadurch gekennzeichnet, dass** die sich überlappenden Schlauchlappen (14 a-b) im Rahmen der Fertigung der Packungen (10) in dem oder jedem Bereich, in dem sie in der Verbindungsstation (24 a-d) gestützt werden, stromauf der Verbindungsstation (24 a-d) durch ein insbesondere weiteres, vorzugsweise einen balkenförmigen Heizkörper umfassendes Heizorgan vorverbunden werden, insbesondere vorgesiegelt oder vorgeschweißt, und dann danach in der Verbindungsstation (24 a-d) in diesem oder jedem gestützten Bereich durch das Heizorgan endverbunden werden, insbesondere endgesiegelt oder endgeschweißt, und/oder dass die sich überlappenden Schlauchlappen (14 a-b) im Rahmen der Fertigung der Packungen (10) in einem, mehreren oder jedem Bereich, in dem sie in der Verbindungsstation (24 a-d) nicht gestützt werden, stromauf der Verbindungsstation (24 a-d) durch ein insbesondere weiteres, vorzugsweise einen balkenförmigen Heizkörper umfassendes Heizorgan endverbunden werden, insbesondere endgesiegelt oder endgeschweißt, vorzugsweise, indem dabei dieser Bereich oder jeder dieser Bereiche auf der zweiten Seite der sich überlappenden Schlauchlappen (14 a-b) an der Innenpackung oder der Gruppe von Innenpackungen anliegt, sodass die sich überlappenden Schlauchlappen (14 a-b) von dieser gestützt werden und von dieser ein das Endverbinden ermöglichender Gegendruck bewirkt wird.

13. Verfahren gemäß einem oder mehreren der vorhergehenden Ansprüche, **dadurch gekennzeichnet, dass** das oder jedes Stützorgan (33) Wärme in die sich überlappenden Abschnitte (14 a-b) einbringt, während sie diese stützt.

14. Vorrichtung zum Verbinden von mindestens zwei sich überlappenden Abschnitten (14 a-b) eines oder mehrerer Zuschnitte (13) aus insbesondere siegelbarer Folie oder insbesondere siegelbarem Papier im Rahmen der Fertigung von Packungen (10), vorzugsweise für Tabakprodukte, wobei die Vorrichtung eine Verbindungsstation (24 a-d) aufweist, in der die sich überlappenden Abschnitte, vorzugsweise mit einem Heizorgan, miteinander verbunden werden unter Aufbringen von Druck auf eine erste Seite der sich überlappenden Abschnitte (14 a-b) sowie unter Verwendung von Wärme, insbesondere zur Durchführung des Verfahrens gemäß einem oder mehreren der vorhergehenden Ansprüche 1 - 16, **dadurch gekennzeichnet, dass** die Verbindungsstation (24 a-d) ein während des Aufbringen des Drucks die sich überlappenden Abschnitte (14 a-b) mindestens bereichsweise stützendes und dabei einen insbesondere die Verbindung der sich überlappenden Abschnitte (14 a-b) ermöglichendes, Gegendruck bewirkendes Stützorgan (33) aufweist, an das eine der ersten Seite gegenüberliegende zweite Seite der sich überlappenden Abschnitte (14 a-b) durch Relativbewegung zwischen dem Stützorgan (33) und den sich überlappenden Abschnitten (14 a-b) zur Anlage bringbar ist, insbesondere ein zum Zweck der Relativbewegung bewegbares Stützorgan (33).

15. Vorrichtung gemäß Anspruch 14, **dadurch gekennzeichnet, dass** die Verbindungsstation (24 a-d) (mindestens) zwei solcher vorzugsweise bewegbaren Stützorgane (33) aufweist, die jeweils durch Relativbewegung zwischen dem jeweiligen Stützorgan (33) und den sich überlappenden Abschnitten (14 a-b) an der zweiten Seite der sich überlappenden Abschnitten (14 a-b) zur Anlage gebracht werden, sodass sie jeweils die sich überlappenden Bereiche mindestens bereichsweise stützen und dabei den Gegendruck bewirken, insbesondere (mindestens) zwei solche Stützorgane (33), die im Bereich gegenüberliegender Seiten einer Förderstrecke angeordnet sind, entlang der der Zuschnitt (13) in die Verbindungsstation (24 a-d) gefördert wird,
und/oder dass das oder jedes Stützorgan (33) eine Stützfläche aufweist, an der die zweite Seite der sich überlappenden Abschnitte (14 a-b) für die Stützung während des Aufbringens des Drucks anliegt.

16. Vorrichtung gemäß einem oder mehreren der vorhergehenden Ansprüche, **gekennzeichnet durch** ein oder mehrere Merkmale der Ansprüche 1 - 13.
